# EUROPÄISCHE PATENTANMELDUNG

(11) **EP 1 327 926 A1**
(43) Veröffentlichungstag der Anmeldung: **16.07.2003**
(21) Anmeldenummer: 02028259.6
(22) Anmeldetag: 16.12.2002
(51) Int. Cl.: G05G 1/14, B60K 26/02

(54) **Fahrpedaleinrichtung**

(30) Priorität: 10.01.2002 DE 10200683
(71) Anmelder: SIEMENS AKTIENGESELLSCHAFT, 80333 München (DE)
(72) Erfinder: Kohlen, Peter, 61267 Neu-Anspach (DE)

(57) **Zusammenfassung**

Die Erfindung bezieht sich auf eine Fahrpedalrichtung zur Steuerung der Leistung eines Motors eines Kraftfahrzeugs, mit einem um eine Schwenkachse 2 schwenkbar gelagerten Fahrpedal 1, das entgegen einer Rückstellkraft 10 einer ersten Rückstellfeder 7 aus einer Ruhestellung im Leistungserhöhungssinn in eine Vollaststellung bewegbar betätigbar ist. Durch eine Zuschalteinrichtung ist das Fahrpedal 1 mit einer weiteren Rückstellkraft beaufschlagbar. Die Zuschalteinrichtung weist ein von dem Fahrpedal 1 in und entgegen dem Leistungserhöhungssinn bewegbar antreibbares erstes Kupplungselement einer Kupplung auf, das mit einem zweiten Kupplungselement der Kupplung kuppelbar ist. Dabei ist bei eingekuppelter Kupplung das zweite Kupplungselement von dem ersten Kupplungselement entgegen der Kraft einer zweiten Rückstellfeder im Leistungserhöhungssinn bewegbar antreibbar.

## Beschreibung

Die Erfindung bezieht sich auf eine zur Steuerung der Leistung eines Motors, insbesondere des Motors eines Kraftfahrzeugs, mit einem um eine Schwenkachse schwenkbar gelagerten Fahrpedal, das entgegen einer Rückstellkraft einer ersten Rückstellfeder aus einer Ruhestellung im Leistungserhöhungssinn in eine Vollaststellung bewegbar betätigbar ist und mit einer Zuschalteinrichtung, durch die das Fahrpedal mit einer weiteren Rückstellkraft beaufschlagbar ist.

Bei einer derartigen Fahrpedaleinrichtung ist es bekannt, dass ein steuerbarer Servomotor mit dem Fahrpedal über eine mechanische Verbindung verbunden ist und auf das Fahrpedal eine gesteuerte Rückstellkraft ausübt. Die Verbindung eines Servomotors, dessen Beaufschlagungskraft des Fahrpedals auch noch in ihrer Höhe veränderbar steuerbar ist, ist aufwendig und teuer. Darüber hinaus unterliegen die Komponenten des Servomotors auch einem erhöhten Verschleiß, so dass diese bekannte Fahrpedaleinrichtung auch defektanfällig ist.

Aufgabe der Erfindung ist es daher, eine Fahrpedaleinrichtung der eingangs genannten Art zu schaffen, die einfach, kostengünstig und verschleißarm aufgebaut ist.

Diese Aufgabe wird erfindungsgemäß dadurch gelöst, dass die Zuschalteinrichtung ein von dem Fahrpedal in und entgegen dem Leistungserhöhungssinn bewegbar antreibbares erstes Kupplungselement einer Kupplung aufweist, das mit einem zweiten Kupplungselement der Kupplung kuppelbar ist, wobei bei eingekuppelter Kupplung das zweite Kupplungselement von dem ersten Kupplungselement entgegen der Kraft einer zweiten Rückstellfeder im Leistungserhöhungssinn bewegbar antreibbar ist.

Die Verwendung einer Kupplung, die nur die Zustände eingekuppelt und ausgekuppelt besitzt, führt zu einer Fahrpedaleinrichtung hoher Lebensdauer bei einfachem Aufbau. Zur Veränderung der Höhe der weiteren Rückstellkraft werden keine besonderen Einrichtungen benötigt, da das Spannen der zweiten Rückstellfeder zwangsläufig zu einem Anstieg ihrer Federkraft führt.

Die Zuschaltung der zweiten Rückstellkraft führt zu einer für die Bedienungsperson des Fahrpedals deutlichen Änderung der erforderlichen Beaufschlagungskraft des Fahrpedals und weckt damit mit haptischen Mitteln seine Aufmerksamkeit für eine bestimmte veränderte Situation. Diese kann z. B. die Überschreitung einer bestimmten maximalen Fahrgeschwindigkeit, das Überschreiten einer gesetzten Fahrgeschwindigkeit eines Geschwindigkeitsreglers durch kurzfristiges Bewegen des Fahrpedals zur Vollaststellung oder das Einschalten einer ASR-Einrichtung sein.

Zwar wird die Bedienperson auf diese veränderte Situation aufmerksam gemacht. Dennoch verbleibt die volle Betätigungsmöglichkeit des Fahrpedals bei der Bedienperson.

Durch die haptische Mitteilung der veränderten Situation erfolgt keinerlei Ablenkung der Bedienperson vom Fahrgeschehen, so dass die Fahrsicherheit nicht beeinträchtigt wird.

Zur einfachen selbsttätigen Zuschaltung der zweiten Rückstellfeder kann die Kupplung eine Schaltkupplung sein, die von dem Ansteuersignal einer Ansteuereinrichtung ansteuerbar ist. Dabei können der Ansteuereinrichtung die entsprechenden Signale wie z. B. ein Geschwindigkeitssignal zugeführt werden, aufgrund dessen dann in der Ansteuereinrichtung das entsprechende Ansteuersignal zum Ansteuern der Schaltkupplung erzeugt wird.

Dabei kann eine Geschwindigkeitsschwelle fest oder variabel an der Ansteuereinrichtung einstellbar sein und bei Erreichen und/oder Überschreiten dieser Geschwindigkeitsschwelle durch die Fahrgeschwindigkeit des Fahrzeugs die Schaltkupplung mit dem Ansteuersignal ansteuerbar sein.

In einfacher und zuverlässiger Ausgestaltung kann die Schaltkupplung eine Magnetkupplung sein.

Ist das erste Kupplungselement von der ersten Rückstellfeder entgegen dem Leistungserhöhungssinn kraftbeaufschlagt, so führt dies zu einer geringen Baugröße der Fahrpedaleinrichtung.

Diese Baugröße kann noch weiter reduziert werden, indem das erste und das zweite Kupplungselement um eine gemeinsame Drehachse drehbare Kupplungsscheiben sind.

Zur einfachen Bewegungsübertragung der Bewegung des Fahrpedals auf die erste Kupplungsscheibe kann in einfacher Ausbildung an dem Fahrpedal von der Schwenkachse des Fahrpedals beabstandet das eine Ende eines starren Übertragungselements angelenkt sein, das mit seinem anderen Ende peripher an der ersten Kupplungsscheibe angelenkt ist.

Die Kupplung kann entweder eine kraftschlüssige Kupplung, nämlich eine Reibungskupplung oder auch eine formschlüssige Kupplung nämlich eine Zahn- oder Klauenkupplung sein.

Eine Ausbildungsmöglichkeit der Rückstellfeder besteht darin, dass die erste und/oder die zweite Rückstellfeder eine Zugfeder ist, die mit ihrem einen Ende an dem ersten oder dem zweiten Kupplungselement angreift und mit ihrem anderen Ende ortsfest angeordnet ist.

Ist erste und/oder zweite Rückstellfeder eine Torsionsfeder, die mit ihrem einen Ende an dem ersten oder dem zweiten Kupplungselement angreift und mit ihrem anderen Ende ortsfest angeordnet ist, so ist dafür nur ein geringer Einbauraum erforderlich.

Um bei Betätigungsbeginn des Fahrpedals sofort eine Reaktionskraft zu spüren, kann die erste Rückstellfeder in der Ruhestellung des Fahrpedals auf eine bestimmte Kraft vorgespannt sein.

Ist die zweite Rückstellfeder bei ausgekuppelter Kupplung auf eine bestimmte Kraft vorgespannt, so ergibt sich bei dem Zuschalten der zweiten Rückstellfeder ein deutlicher Kraftsprung, der haptisch die Bedienperson auf eine veränderte Situation aufmerksam macht. Je nach der Empfindung der Bedienperson kann die Vorspannung der zweiten Rückstellfeder und damit der erzeugte Kraftsprung variabel einstellbar sein.

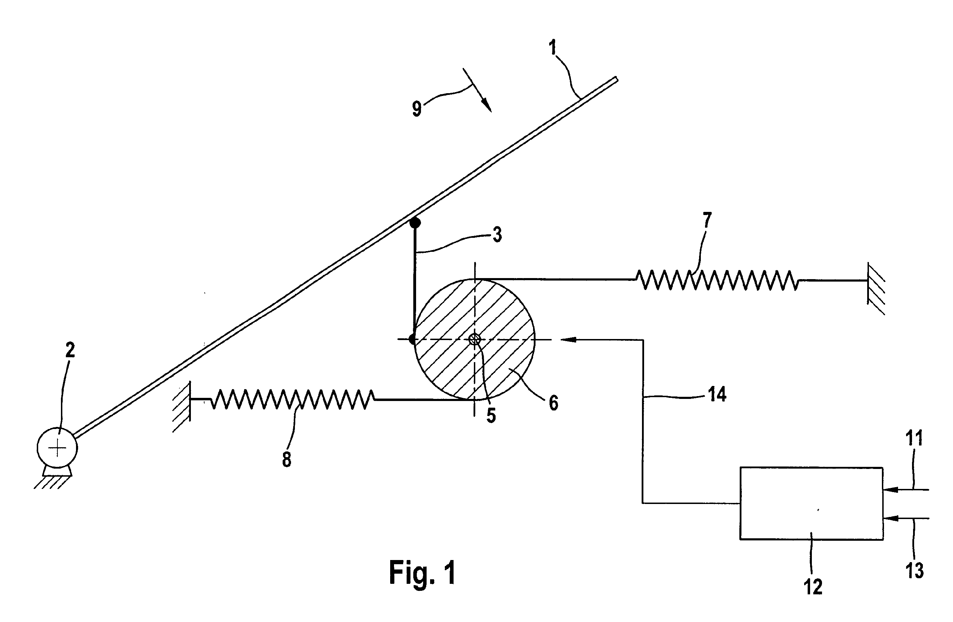

Ein Ausführungsbeispiel der Erfindung ist in der Zeichnung dargestellt und wird im folgenden näher beschrieben. Es zeigen
- Figur 1: eine Prinzipdarstellung einer Fahrpedaleinrichtung in der Seitenansicht,
- Figur 2: eine Frontansicht der Kupplungsscheiben der Fahrpedaleinrichtung nach Figur 1,
- Figur 3: ein Diagramm der Pedalkraft über dem Pedalweg der Fahrpedaleinrichtung nach Figur 1.

Die dargestellte Fahrpedaleinrichtung weist ein Fahrpedal 1 eines Kraftfahrzeugs auf, das an seinem unteren Ende um eine Schwenkachse 2 schwenkbar ist. Von der Schwenkachse 2 beabstandet ist an dem Fahrpedal 1 eine starre Schub-Zugstange 3 mit ihrem einen Ende angelenkt, die mit ihrem anderen Ende etwa tangential peripher an einer ersten Kupplungsscheibe 4 angelenkt ist.

Die erste Kupplungsscheibe 4 ist um eine Drehachse 5 frei drehbar gelagert. Um dieselbe Drehachse 5 ebenfalls frei drehbar gelagert ist koaxial neben der ersten Kupplungsscheibe 4 eine zweite Kupplungsscheibe 6 angeordnet, die zusammen mit der ersten Kupplungsscheibe 4 die Kupplungselemente einer als Magnetkupplung ausgebildeten Schaltkupplung bildet.

Ebenfalls etwa tangential peripher greift an der ersten Kupplungsscheibe 4 das eine Ende einer als Zugfeder ausgebildeten ersten Rückstellfeder 7 an, deren anderes Ende ortsfest befestigt ist.

An der zweiten Kupplungsscheibe 6 greift etwa tangential peripher das eine Ende einer ebenfalls als Zugfeder ausgebildeten zweiten Rückstellfeder 8 an, deren anderes Ende ebenfalls ortsfest befestigt ist.

Beide Rückstellfedern 7 und 8 sind gleichgerichtet und weisen beide in der dargestellten Ruhestellung der Fahrpedaleinrichtung eine Vorspannung auf. In dieser Ruhestellung ist die Kupplung geöffnet und die beiden Kupplungsscheiben 4 und 6 sind außer Eingriff voneinander.

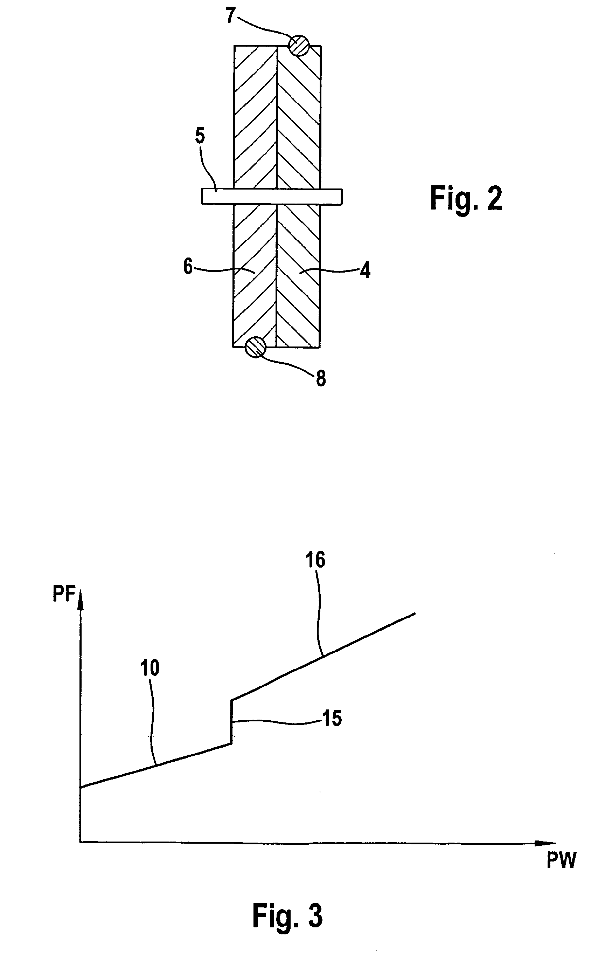

Bei Betätigung des Fahrpedals 1 wird durch eine Bedienperson dieses Fahrpedal 1 in Richtung des Pfeils 9 kraftbeaufschlagt und dadurch verschwenkt. Diesem Verschwenken wirkt über die Schub-Zugstange 3 und die dabei verschwenkte erste Kupplungsscheibe 4 die sich weiter spannende erste Rückstellfeder 7 mit steigender Rückstellkraft 10 entgegen. Dies ist in dem ersten Teil des Diagramms in Figur 3 zu erkennen, in den die auf das Fahrpedal 1 einwirkende Rückstellkraft PF über den Bewegungsweg PW des Fahrpedals 1 aufgetragen ist.

Über einen ersten Eingang 11 ist einer elektronischen Ansteuereinheit 12 ein Signal zum Setzen einer Höchstgeschwindigkeit durch die Bedienperson eingebbar. Über einen zweiten Eingang 13 erhält die Ansteuereinrichtung 12 ein Signal über die jeweils gefahrene Fahrgeschwindigkeit des Kraftfahrzeugs von einem nicht dargestellten Geschwindigkeitssensor zugeführt.

Wird durch die Ansteuereinrichtung 12 festgestellt, dass die gesetzte Fahrgeschwindigkeit von der momentan gefahrenen Fahrgeschwindigkeit überschritten wird, so wird von der Ansteuereinrichtung 12 ein Schließsignal erzeugt und über einen Ausgang 14 der Kupplung zugeführt. Dieses Schließsignal steuert die Magnetkupplung zum Schließen an, so dass die beiden Kupplungsscheiben 4 und 6 miteinander in Eingriff kommen. Damit wird der Rückstellkraft 10 der ersten Rückstellfeder 7 die Rückstellkraft der zweiten Rückstellfeder 8 zugeschaltet, was aufgrund der Vorspannung der zweiten Rückstellfeder 8 zunächst einen Kraftsprung 15 erzeugt.

Bei weiterem Niederdrücken des Fahrpedals 1 muss nun die gemeinsame Rückstellkraft 16 von erster und zweiter Rückstellfeder 7 und 8 überwunden werden.

Bereits der Kraftsprung 15, aber auch die im folgenden gegenüber der Rückstellkraft 10 der ersten Rückstellfeder mit größerer Steigung ansteigende gemeinsame Rückstellkraft 16 macht mit haptischen Mitteln die Bedienperson darauf aufmerksam, dass die von ihr gesetzte Höchstgeschwindigkeit überschritten wurde und die gefahrene Geschwindigkeit wieder reduziert werden sollte. Wird die gefahrene Geschwindigkeit wieder unter die gesetzte Höchstgeschwindigkeit reduziert, wird dies von der Ansteuereinrichtung 12 erkannt, die Ansteuerung der Magnetkupplung beendet und die Kupplungsscheiben 4 und 6 voneinander getrennt. Damit ist nur noch die Rückstellkraft 10 der ersten Rückstellfeder 7 wirksam.

## Patentansprüche

1. Fahrpedaleinrichtung zur Steuerung der Leistung eines Motors, insbesondere des Motors eines Kraftfahrzeugs, mit einem um eine Schwenkachse schwenkbar gelagerten Fahrpedal, das entgegen einer Rückstellkraft einer ersten Rückstellfeder aus einer Ruhestellung im Leistungserhöhungssinn in eine Vollaststellung bewegbar betätigbar ist und mit einer Zuschalteinrichtung, durch die das Fahrpedal mit einer weiteren Rückstellkraft beaufschlagbar ist, **dadurch gekennzeichnet, dass** die Zuschalteinrichtung ein von dem Fahrpedal (1) in und entgegen dem Leistungserhöhungssinn bewegbar antreibbares erstes Kupplungselement einer Kupplung aufweist, das mit einem zweiten Kupplungselement der Kupplung kuppelbar ist, wobei bei eingekuppelter Kupplung das zweite Kupplungselement von dem ersten Kupplungselement entgegen der Kraft einer zweiten Rückstellfeder (8) im Leistungserhöhungssinn bewegbar antreibbar ist.

2. Fahrpedaleinrichtung nach Anspruch 1, **dadurch gekennzeichnet, dass** die Kupplung eine Schaltkupplung ist, die von dem Ansteuersignal einer Ansteuereinrichtung (12) ansteuerbar ist.

3. Fahrpedaleinrichtung nach Anspruch 2, **dadurch gekennzeichnet, dass** eine Geschwindigkeitsschwelle fest oder variabel an der Ansteuereinrichtung (12) einstellbar ist und dass bei Erreichen und/oder Überschreiten dieser Geschwindigkeitsschwelle durch die Fahrgeschwindigkeit des Fahrzeugs die Schaltkupplung mit dem Ansteuersignal ansteuerbar ist.

4. Fahrpedaleinrichtung nach einem der Ansprüche 2 und 3, **dadurch gekennzeichnet, dass** die Schaltkupplung eine Magnetkupplung ist.

5. Fahrpedaleinrichtung nach einem der vorhergehenden Ansprüche, **dadurch gekennzeichnet, dass** das erste Kupplungselement von der ersten Rückstellfeder (7) entgegen dem Leistungserhöhungssinn kraftbeaufschlagt ist.

6. Fahrpedaleinrichtung nach einem der vorhergehenden Ansprüche, **dadurch gekennzeichnet, dass** das erste und das zweite Kupplungselement um eine gemeinsame Drehachse (5) drehbare Kupplungsscheiben (4, 6) sind.

7. Fahrpedaleinrichtung nach Anspruch 6, **dadurch gekennzeichnet, dass** an dem Fahrpedal (1) von der Schwenkachse (2) des Fahrpedals (1) beabstandetet das eine Ende eines starren Übertragungselements angelenkt ist, das mit seinem anderen Ende peripher an der ersten Kupplungsscheibe (4) angelenkt ist.

8. Fahrpedaleinrichtung nach einem der vorhergehenden Ansprüche, **dadurch gekennzeichnet, dass** die Kupplung eine Reibkupplung ist.

9. Fahrpedaleinrichtung nach einem der Ansprüche 1 bis 7, **dadurch gekennzeichnet, dass** die Kupplung eine Zahn- oder Klauenkupplung ist.

10. Fahrpedaleinrichtung nach einem der vorhergehenden Ansprüche, **dadurch gekennzeichnet, dass** die erste und/oder die zweite Rückstellfeder (7, 8) eine Zugfeder ist, die mit ihrem einen Ende an dem ersten oder dem zweiten Kupplungselement angreift und mit ihrem anderen Ende ortsfest angeordnet ist.

11. Fahrpedaleinrichtung nach Anspruch 7, **dadurch gekennzeichnet, dass** die erste und/oder zweite Rückstellfeder eine Torsionsfeder ist, die mit ihrem einen Ende an dem ersten oder dem zweiten Kupplungselement angreift und mit ihrem anderen Ende ortsfest angeordnet ist.

12. Fahrpedaleinrichtung nach einem der vorhergehenden Ansprüche, **dadurch gekennzeichnet, dass** die erste Rückstellfeder (7) in der Ruhestellung des Fahrpedals (1) auf eine bestimmte Kraft vorgespannt ist.

13. Fahrpedaleinrichtung nach einem der vorhergehenden Ansprüche, **dadurch gekennzeichnet, dass** die zweite Rückstellfeder (8) bei ausgekuppelter Kupplung auf eine bestimmte Kraft vorgespannt ist.

14. Fahrpedaleinrichtung nach Anspruch 13, **dadurch gekennzeichnet, dass** die Vorspannung der zweiten Rückstellfeder (8) variabel einstellbar ist.
